# DEMANDE DE BREVET EUROPEEN

(11) **EP 0 985 835 A1**
(43) Date de publication de la demande: **15.03.2000**
(21) Numéro de dépôt: 99420173.9
(22) Date de dépôt: 26.07.1999
(51) Int. Cl.: F16B 45/02

(54) **Mousqueton à levier de verrouillage blocable**

(30) Priorité: 13.08.1998 FR 9810494
(71) Demandeur: ETABLISSEMENTS LUDGER SIMOND, F-74400 Chamonix Mont Blanc (FR)
(72) Inventeur: Simond, Ludger, 74310 Les Houches (FR)
(74) Mandataire: Poncet, Jean-François

(57) **Abrégé**

Le mousqueton selon l'invention comprend un corps (1) fermé par un doigt pivotant (7) dont la rotation peut être interdite par un levier de verrouillage (15) transversal. Le levier de verrouillage (15) est articulé selon un axe de levier (16) sur le doigt pivotant (7) et comprend une encoche (17) venant en prise sur un ergot frontal (18) du corps (1) en position de verrouillage dans laquelle il est rappelé par un ressort (27). Une butée mobile (31) peut être sélectivement positionnée sur le levier de verrouillage (15) pour interdire son pivotement de déverrouillage. On assure ainsi un verrouillage fiable, à l'aide d'un levier de verrouillage (15) aisément manipulable et blocable.

## Description

La présente invention concerne les mousquetons à verrouillage automatique dans lesquels le verrouillage est assuré par un levier de verrouillage transversal venant en prise entre le doigt pivotant de fermeture et une portion opposée du corps de mousqueton pour interdire sélectivement le pivotement du doigt de verrouillage dans le sens de l'ouverture.

De tels mousquetons à verrouillage automatique par levier transversal sont déjà connus du document FR 2 439 330 A et du document FR 2 485 658 A.

Dans l'un et l'autre de ces documents, le mousqueton comprend un corps de mousqueton ayant une ouverture fermée sélectivement par un doigt pivotant articulé à sa première extrémité selon un axe de rotation transversal, avec un levier transversal de verrouillage monté de façon à pouvoir pivoter autour d'un axe de levier entre une position de verrouillage vers laquelle il est rappelé par des moyens élastiques et dans laquelle il est engagé entre le doigt pivotant et une portion opposée du corps pour interdire la rotation du doigt pivotant, et une position déverrouillée dans laquelle il libère le doigt pivotant pour sa rotation d'ouverture. L'axe du levier de verrouillage est disposé dans ladite portion opposée du corps, et le levier de verrouillage vient s'engager sur le doigt pivotant par son extrémité libre.

Dans le document FR 2 485 658 A, le levier de verrouillage est généralement rectiligne, engagé entièrement entre la portion opposée du corps et le doigt pivotant, au voisinage de l'extrémité libre du doigt pivotant. Il en résulte que le levier de verrouillage réduit la capacité d'ouverture du mousqueton, et constitue un élément qui est peu commode à actionner. Ainsi, ce dispositif n'est pas adapté à un usage pour l'alpinisme ou pour des travaux en hauteur, dans lesquels les conditions de sécurité doivent être respectées sans nécessiter une intervention difficile et fastidieuse de l'utilisateur. En outre, rien n'interdit le pivotement du levier de verrouillage, qui risque ainsi d'être déverrouillé de façon intempestive.

Dans le document FR 2 439 330 A, le levier transversal de verrouillage est disposé plus à l'écart de l'extrémité libre du doigt pivotant, de sorte que les capacités d'ouverture sont améliorées. Egalement, le levier de verrouillage a une forme en L avec une branche longitudinale qui dépasse radialement au-delà de la portion opposée du corps, de sorte que la manoeuvre du levier de verrouillage est facilitée. Cependant, l'extrémité libre du levier de verrouillage comprend deux branches parallèles disposées chacune de part et d'autre du doigt pivotant pour venir s'engager sur des bossages latéraux du doigt pivotant pour le verrouillage. Les branches parallèles d'extrémité du levier de verrouillage constituent des éléments relativement peu résistants, susceptibles d'être déformés au cours de l'utilisation. Leur déformation par écartement risque d'inhiber toute capacité de verrouillage du levier de verrouillage, affectant ainsi la fiabilité et la sécurité du mousqueton. En outre, le levier de verrouillage est exagérément dépassant à l'écart du corps, et constitue un élément protubérant qui risque de perturber l'utilisation et d'être sollicité de façon intempestive.

Dans ce document, une bague coulissante, montée sur la portion opposée du corps, peut venir bloquer le levier de verrouillage pour interdire son pivotement vers la position déverrouillée. L'inconvénient est alors qu'il est nécessaire de manoeuvrer à chaque fois la bague de blocage pour permettre ensuite la manoeuvre du levier de verrouillage assurant le déverrouillage.

Le problème proposé par la présente invention est de concevoir une nouvelle structure de mousqueton à verrouillage automatique par levier transversal de verrouillage, qui assure à la fois un verrouillage fiable et efficace et une capacité d'ouverture maximale du mousqueton, et qui permette d'assurer sélectivement un blocage ou un déblocage permanent du levier de verrouillage, permettant, au choix de l'utilisateur, d'assurer un simple verrouillage ou un double verrouillage. Le passage de l'état bloqué à l'état débloqué doit s'effectuer de façon simple et rapide par une action volontaire de l'utilisateur.

L'invention vise également à concevoir une telle structure de mousqueton qui soit particulièrement simple et peu onéreuse à fabriquer.

Pour atteindre ces objets ainsi que d'autres, un mousqueton à verrouillage automatique selon l'invention comprend un corps de mousqueton ayant une ouverture fermée par un doigt pivotant articulé à sa première extrémité selon un axe de rotation transversal, avec un levier de verrouillage transversal monté de façon à pouvoir pivoter autour d'un axe de levier entre une position de verrouillage vers laquelle il est rappelé par des moyens élastiques et dans laquelle il est engagé entre le doigt pivotant et une portion opposée du corps pour interdire la rotation du doigt pivotant, et une position déverrouillée dans laquelle il libère le doigt pivotant pour sa rotation d'ouverture, avec un moyen de blocage pour bloquer sélectivement la rotation du levier de verrouillage à l'écart de la position de verrouillage et interdire le déverrouillage ; selon l'invention :
- le moyen de blocage est une butée mobile, montée sur le levier de verrouillage, et déplaçable sur des guides entre une position de blocage dans laquelle elle vient en appui contre une portion du corps pour s'opposer au pivotement du levier de verrouillage, et une position de déblocage dans laquelle elle reste à l'écart de la portion du corps pour autoriser le pivotement de déverrouillage du levier de verrouillage.

Selon un mode de réalisation, les guides comportent une première encoche peu profonde dans laquelle est engagée la butée mobile en position de blocage, et une encoche plus profonde dans laquelle peut s'engager la butée mobile en position débloquée, les encoches se développant selon une direction généralement radiale à l'écart du corps.

La butée mobile peut avantageusement être sollicitée par un ressort qui la repousse à l'écart du corps soit dans le fond de la première encoche soit vers le fond de la seconde encoche.

De préférence, le même ressort rappelle le levier de verrouillage vers sa position de verrouillage et repousse la butée mobile à l'écart du corps.

D'autres objets, caractéristiques et avantages de la présente invention ressortiront de la description suivante de modes de réalisation particuliers, faite en relation avec les figures jointes, parmi lesquelles:
- la figure 1 est une vue de face d'un mousqueton selon un premier mode de réalisation de la présente invention, en position fermée et verrouillée, avec le levier de verrouillage à l'état bloqué ;
- la figure 2 est une vue de dessus en coupe selon le plan A-A de la figure 1 ;
- la figure 3 est une vue de face du mousqueton de la figure 1, en position fermée et verrouillée avec le levier de verrouillage à l'état débloqué ;
- la figure 4 est une vue de face du mousqueton de la figure 1 en position fermée déverrouillée ;
- la figure 5 est une vue de face du mousqueton de la figure 1 en position ouverte ;
- la figure 6 est une vue de face d'un mousqueton selon un second mode de réalisation de la présente invention, en position fermée et verrouillée avec le levier de verrouillage à l'état -bloqué ;
- la figure 7 est une vue de face du mousqueton de la figure 6 en position fermée et verrouillée avec le levier de verrouillage à l'état débloqué ;
- la figure 8 est une vue de face du mousqueton de la figure 6 en position fermée déverrouillée ; et
- la figure 9 est une vue de face du mousqueton de la figure 6 en position ouverte.

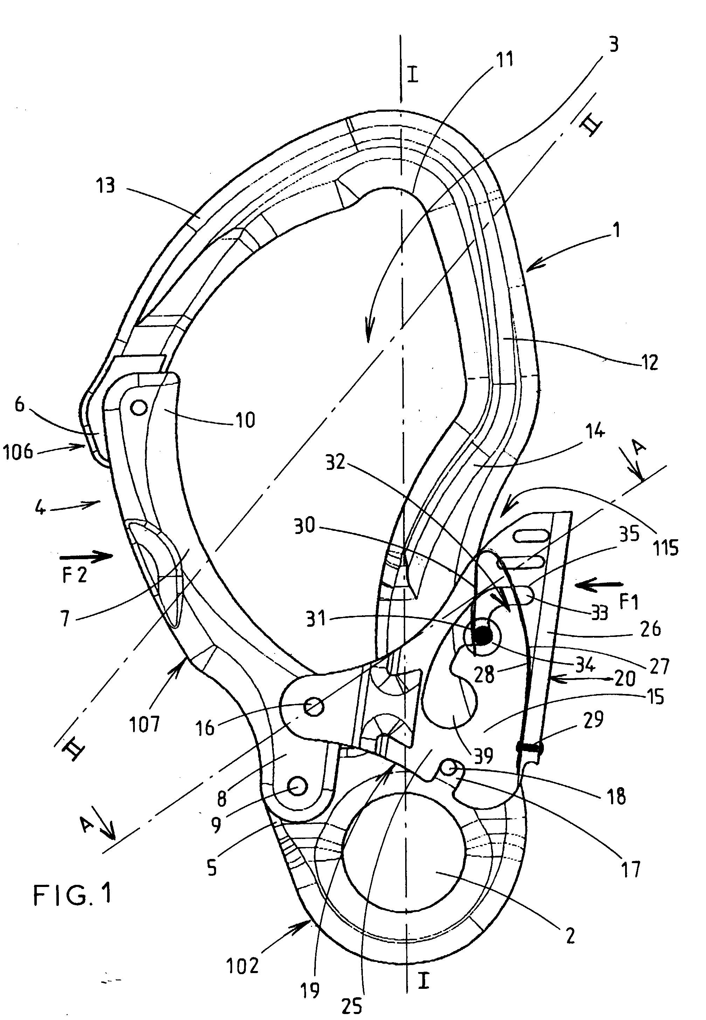

Dans les deux modes de réalisation illustrés sur les figures, un mousqueton à verrouillage automatique selon l'invention comprend un corps 1 de mousqueton ayant une première boucle fermée 2 et une seconde boucle ouvrante 3. La boucle ouvrante 3 comprend une ouverture 4, limitée par une première extrémité de corps 5 et par une seconde extrémité de corps 6. L'ouverture 4 est sélectivement fermée par un doigt pivotant 7 articulé à sa première extrémité 8 sur la première extrémité de corps 5 selon un axe de rotation transversal 9. En position fermée illustrée sur la figure 1, la seconde extrémité 10 du doigt pivotant 7 vient s'engager sur la seconde extrémité de corps 6.

Dans les modes de réalisation illustrés, le mousqueton présente une forme particulière et avantageuse. Ainsi, si l'on considère l'axe longitudinal I-I de mousqueton, reliant le centre de la première boucle fermée 2 et le sommet 11 de la seconde boucle ouvrante 3, on remarque que le corps 1 comprend une branche longitudinale 12 généralement parallèle à l'axe I-I et relativement proche de l'axe, alors que le doigt pivotant 7 et la seconde branche oblique 13 correspondante du corps 1 s'écartent de l'axe longitudinal I-I. Depuis le sommet 11, la seconde branche oblique 13 se développe en oblique jusqu'à la seconde extrémité de corps 6. A sa base, la branche longitudinale 12 du corps 1 comporte une portion oblique 14 qui se rapproche progressivement de l'axe longitudinal I-I, pour réaliser un évidement externe 115 dans la portion du corps 1 opposée au doigt pivotant 7.

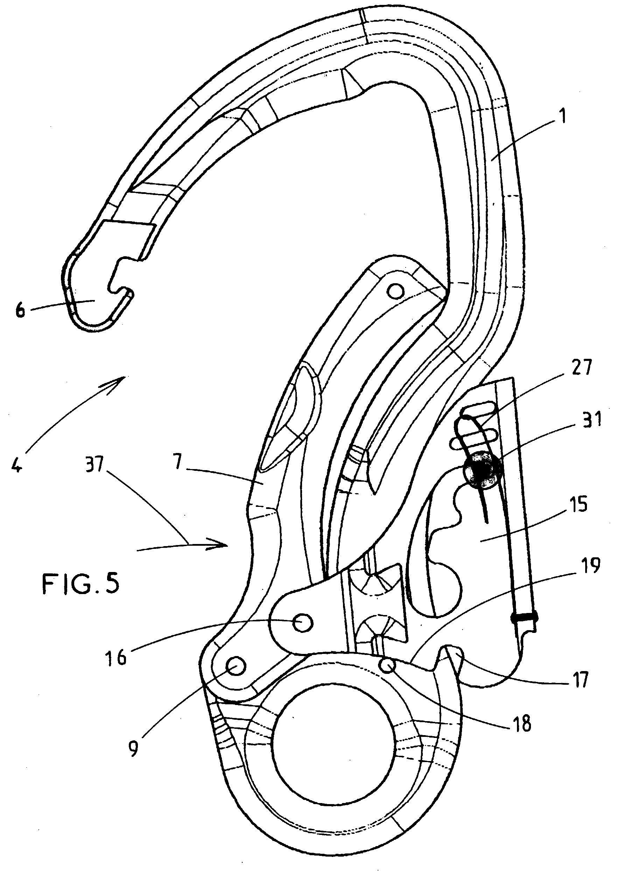

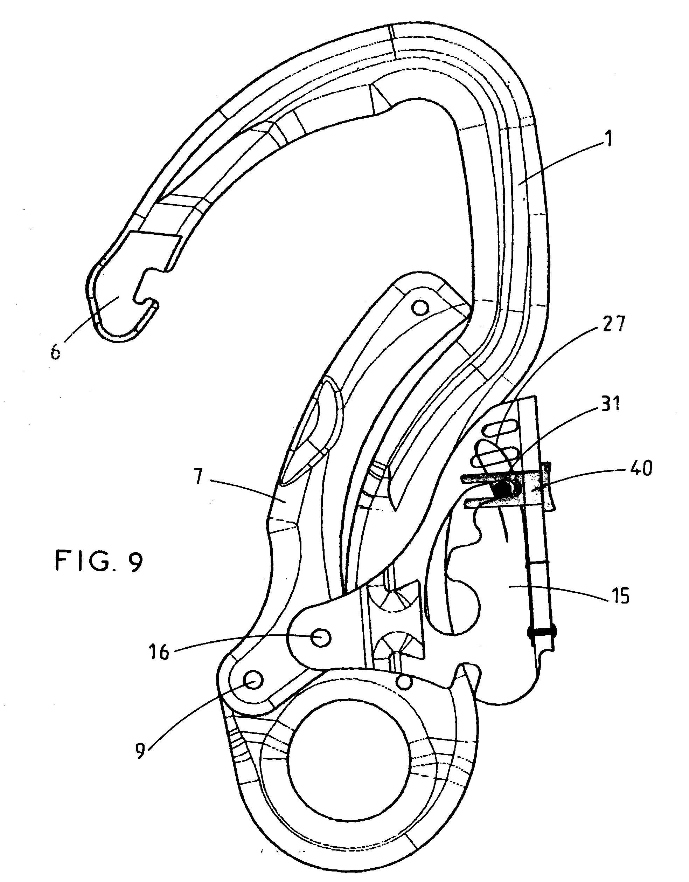

Par la présence de la seconde branche oblique 13 et de la portion oblique 14 du corps 1, la seconde boucle ouvrante 3 se trouve allongée selon un axe oblique II-II, avec un fond de seconde boucle ouvrante 3 constitué par le sommet 11 et la branche longitudinale 12 de corps, le fond étant opposé à l'ouverture 4 fermée par le doigt pivotant 7. Lors de l'ouverture du doigt pivotant 7, comme illustré sur la figure 5 ou la figure 9, le doigt pivotant 7 vient en appui contre la portion oblique 14 du corps 1, et libère ainsi un grand espace de la seconde boucle ouvrante 3. Le mousqueton constitue alors un crochet largement ouvert qu'il est très facile d'engager sur un élément d'ancrage tel qu'une barre, un anneau, un câble, une corde.

La portion oblique 14 et le doigt pivotant 7 sont avantageusement incurvés comme illustré sur les figures. Toutefois, la portion radialement la plus externe 107 du doigt pivotant 7 reste en retrait de la ligne joignant les zones les plus proéminentes 106 et 102 du corps 1 de part et d'autre du doigt pivotant 7. De la sorte, le doigt pivotant 7 n'est pas sollicité en rotation lorsque le mousqueton est en appui sur un plan par ses deux zones proéminentes 106 et 102.

Le mousqueton selon l'invention comprend en outre un levier de verrouillage 15 transversal, monté pivotant autour d'un axe de levier 16 disposé en position intermédiaire sur le doigt pivotant 7. Dans la réalisation avantageuse illustrée, l'axe de levier 16 est plus proche de la première extrémité 8 que de la seconde extrémité 10 du doigt pivotant 7, par exemple au voisinage du cinquième de la longueur du doigt pivotant 7 à partir de la première extrémité 8 du doigt pivotant 7.

Le levier de verrouillage 15 comprend une partie engageante 17 coopérant avec une zone d'appui 18 correspondante prévue dans une portion du corps 1 opposée au doigt pivotant 7.

Dans le mode de réalisation illustré sur les figures, la partie engageante 17 comprend au moins une encoche ménagée dans une rampe constituée par le bord inférieur 19 du levier de verrouillage, et la zone d'appui 18 du corps 1 comprend au moins un ergot frontal dépassant du corps 1 parallèlement à l'axe de levier 16. Le bord inférieur 19 du levier de verrouillage 15 est généralement perpendiculaire à l'axe longitudinal I-I du mousqueton, tandis que l'encoche 17 constituant la partie engageante est généralement longitudinale, c'est-à-dire parallèle à l'axe longitudinal I-I. En position verrouillée illustrée sur la figure 1, l'ergot 18 frontal engagé dans l'encoche 17 interdit le déplacement du levier de verrouillage 15 vers la droite, et assure ainsi le verrouillage en s'opposant au pivotement du doigt pivotant 7 qui est maintenu en position fermée.

Ainsi, en position de verrouillage, la partie engageante 17 et la zone d'appui 18 correspondante du corps 1 s'opposent au déplacement transversal du levier de verrouillage 15 et du doigt pivotant 7.

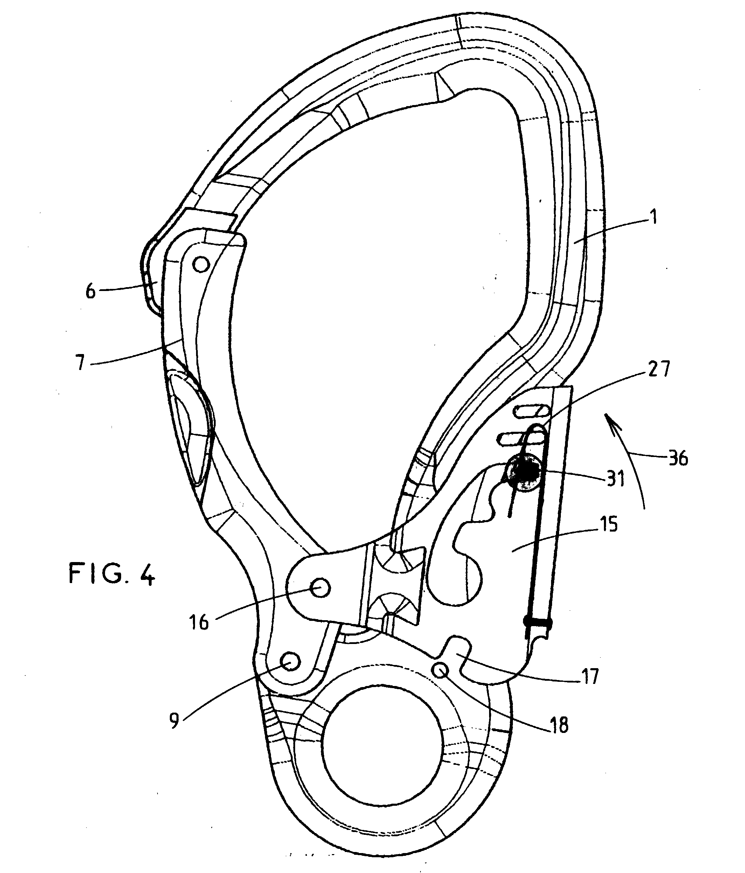

En position déverrouillée illustrée sur la figure 4, le levier de verrouillage 15 est pivoté, et la partie engageante 17 ou encoche échappe à la zone d'appui 18 ou ergot frontal du corps 1 pour autoriser le déplacement transversal du levier de verrouillage 15 et le pivotement d'ouverture du doigt pivotant 7.

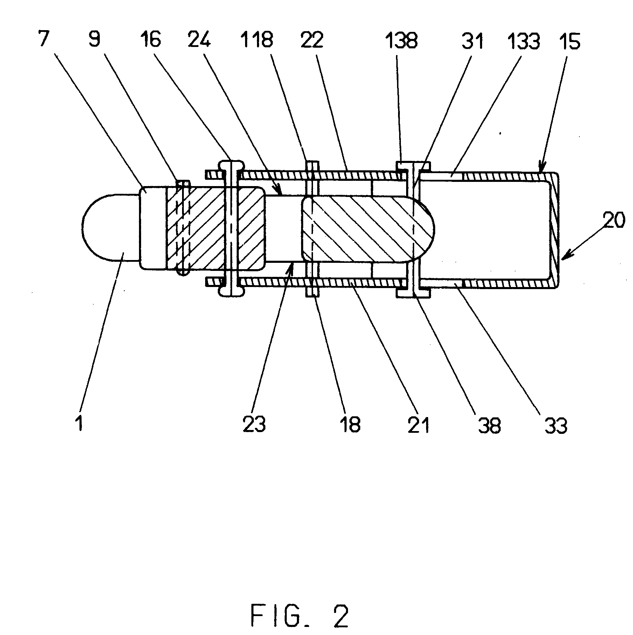

Comme on le voit sur la figure 2, le levier de verrouillage 15 selon ce mode de réalisation est une plaque repliée en U, formant deux branches parallèles respectives 21 et 22 reliées par une paroi d'appui 20. La branche 21 est disposée au regard de la face antérieure 23 du corps 1, tandis que la branche 22 est disposée en regard de la face postérieure 24 du corps 1. Les extrémités libres des branches 21 et 22 sont reliées par l'axe de levier 16 qui, tout en autorisant le pivotement du levier de verrouillage 15, s'oppose à tous risques d'écartement des branches 21 et 22.

De préférence, comme illustré sur le figure 1, en vue de face, le levier de verrouillage 15 a une forme générale en L, avec une branche transversale de verrouillage 25 se développant entre l'axe de levier 16 sur le doigt pivotant 7 et la partie engageante 17, et avec une branche longitudinale de manoeuvre 26 dépassant radialement au-delà de la portion opposée du corps 1 tout en restant de préférence engagée dans l'évidement externe 115 pour éviter d'être exagérément proéminente. La branche longitudinale de manoeuvre 26 se prolonge longitudinalement en direction du sommet 11 du corps 1 de mousqueton au-delà de la zone transversale de mousqueton contenant l'axe de levier 16. Grâce à la branche longitudinale de manoeuvre 26, la paroi d'appui 20 est allongée, pour constituer un appui plus confortable pour l'utilisateur qui vient presser la paroi d'appui 20 pour faire pivoter le levier de verrouillage 15 entre la position verrouillée de la figure 1 et la position déverrouillée de la figure 4.

Egalement, dans le mode de réalisation illustré, du fait de la position de la partie engageante 17 sous forme d'encoche dans le bord inférieur 19 du levier de verrouillage 15, lors de la rotation de déverrouillage, le levier de verrouillage 15 pivote dans le sens opposé de la rotation d'ouverture du doigt pivotant 7 : sur la figure 1, pour le déverrouillage, le levier de verrouillage 15 pivote dans le sens inverse des aiguilles d'une montre, tandis que pour l'ouverture, le doigt pivotant 7 pivote dans le sens des aiguilles d'une montre. Il en résulte que, pour produire le déverrouillage, l'utilisateur applique une force F1 sur la paroi d'appui 20 du levier de verrouillage 15, force dirigée radialement vers le centre du mousqueton. Simultanément ou peu après, l'utilisateur applique sur le doigt pivotant 7 une force F2 radialement vers le centre du mousqueton, force opposée à la force F1, pour amener le doigt pivotant 7 en position d'ouverture. Ainsi, le déverrouillage et l'ouverture du mousqueton deviennent très faciles, par une action de pression simultanée par l'utilisateur selon les forces F1 et F2.

En alternative, on pourrait prévoir une partie engageante 17 de forme différente, par exemple sous forme d'une lumière dans le levier de verrouillage 15, pour laquelle le déverrouillage impliquerait la rotation du levier de verrouillage 15 dans le sens des aiguilles d'une montre vers l'extérieur, le déverrouillage étant ainsi réalisé par une rotation du levier de verrouillage 15 dans le même sens de rotation que la rotation d'ouverture du doigt pivotant 7.

En se référant à nouveau à la figure 2, on voit que la zone d'appui du corps est en réalité réalisée par un premier ergot frontal 18, et par un second ergot postérieur correspondant 118. L'ergot frontal 18 coopère avec une encoche 17 telle qu'illustrée sur la figure 1, tandis que l'ergot postérieur 118 coopère avec une encoche similaire ménagée dans la seconde branche 22 du levier de verrouillage 15 non représentée sur la figure.

Comme on le voit également sur la figure 1, un ressort 27 est engagé entre le levier de verrouillage 15 et le corps 1 pour rappeler le levier de verrouillage 15 en position verrouillée dans laquelle l'encoche 17 est engagée en appui sur l'ergot frontal 18.

Dans la réalisation illustrée, le ressort 27 est une lame flexible recourbée selon deux branches 28 et 30 généralement parallèles, avec une première branche 28 dont une première extrémité est fixée au levier de verrouillage 15 selon une zone de fixation 29 et dont une deuxième extrémité est en appui contre la face extérieure de la branche longitudinale 12 du corps 1 et est coudée pour se raccorder à une seconde branche 30 généralement parallèle à la première branche 28. Ainsi, la première branche 28 du ressort 27 est engagée fonctionnellement entre le corps 1 et le levier de verrouillage 15 pour repousser le levier de verrouillage 15 vers sa position verrouillée.

Dans les modes de réalisation illustrés, le mousqueton comprend en outre un moyen de blocage pour bloquer sélectivement la rotation du levier de verrouillage 15 et interdire le déverrouillage.

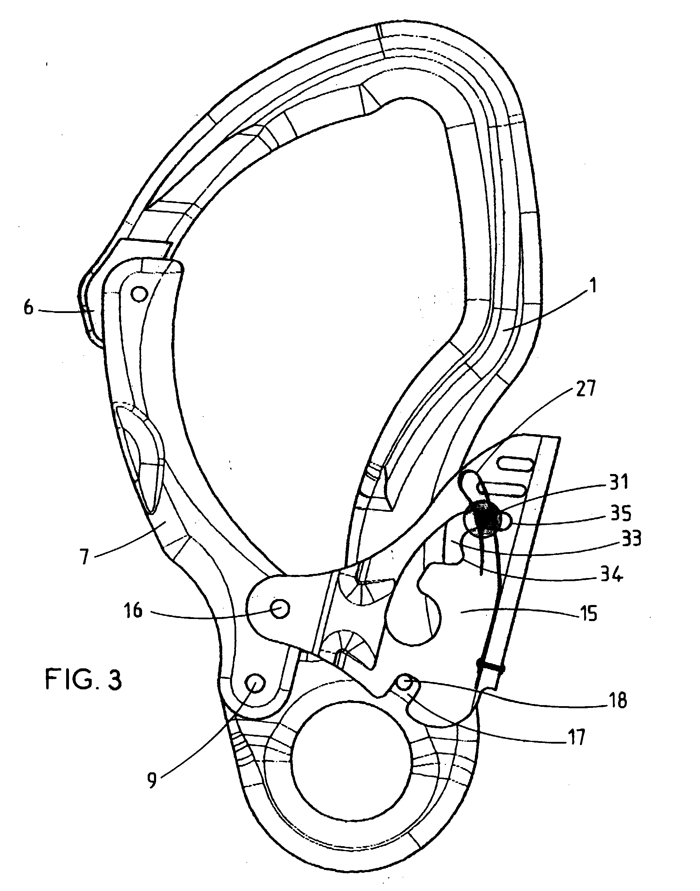

Sur les figures, le moyen de blocage est une butée mobile 31, montée sur le levier de verrouillage 15, et déplaçable sur des guides 32 entre une position de blocage, illustrée sur la figure 1, dans laquelle la butée mobile 31 vient en appui contre une portion du corps 1 pour s'opposer au pivotement du levier de verrouillage 15, et une position de déblocage illustrée sur la figure 3 dans laquelle la butée mobile 31 reste à l'écart de la portion du corps 1 pour autoriser le pivotement de déverrouillage du levier de verrouillage 15.

La butée mobile 31 est un axe antéropostérieur, monté à coulissement dans deux lumières latérales 33 et 133 (figure 2) formant les guides 32 et prévues chacune dans l'une des branches parallèles 21 et 22 du levier de verrouillage 15. Les lumières telles que la lumière latérale 33 comportent une première encoche peu profonde 34 dans laquelle est engagée la butée mobile 31 en position de blocage, et une seconde encoche plus profonde 35 dans laquelle peut s'engager la butée mobile 31 en position débloquée. Les encoches 34, 35 se développent selon une direction généralement radiale à l'écart du corps 1.

La seconde branche 30 du ressort 27 est engagée fonctionnellement entre le corps 1 et la butée mobile 31 pour repousser la butée mobile 31 à l'écart du corps 1, soit dans le fond de la première encoche 34 soit vers le fond de la seconde encoche 35.

Le fonctionnement du mousqueton va maintenant être expliqué en relation avec les figures 1 à 5.

En position fermée, verrouillée et bloquée illustrée sur la figure 1, la butée mobile 31 est engagée dans la première encoche 34 de la lumière latérale 33, dans laquelle elle est repoussée par le ressort 27. Dans cette première encoche 34, la butée mobile 31 se trouve à proximité immédiate de la face latérale du corps 1, interdisant la rotation du levier de verrouillage 15 dans le sens des aiguilles d'une montre.

Sur la figure 3, on a déplacé la butée mobile 31 dans la seconde encoche 35 de la lumière latérale 33. Dans ce cas, la butée mobile 31 est à l'écart du corps 1, et autorise la rotation du levier de verrouillage 15 dans le sens des aiguilles d'une montre. Le levier de verrouillage 15 reste toutefois en position verrouillée dans laquelle il est rappelé par le ressort 27, interdisant le pivotement du doigt pivotant 7.

Sur la figure 4, le mousqueton se trouve en position déverrouillée fermée : l'utilisateur a fait pivoter le levier de verrouillage 15 dans le sens du déverrouillage 36 autour de son axe de levier 16, à l'encontre de la sollicitation de rappel exercée par le ressort 27, dégageant l'encoche 17 à l'écart de l'ergot frontal 18. Le doigt pivotant 7 reste cependant en position fermée, dans laquelle il est rappelé par un ressort de rappel non représenté sur les figures.

Sur la figure 5, l'utilisateur a sollicité le doigt pivotant 7 dans le sens illustré par la flèche 37 autour de son axe de rotation transversal 9, pour l'amener en position ouverte, libérant l'ouverture 4. Dans ce mouvement, l'ergot frontal 18 peut glisser sur la rampe constituée par le bord inférieur 19 du levier de verrouillage 15.

Dans le mode de réalisation illustré sur les figures 1 à 5, mieux visible sur la figure 2, la butée mobile 31 est un axe antéropostérieur avec deux têtes d'extrémité 38 et 138 plus larges que la portion de lumière latérale 33 comportant les encoches 34 et 35. Une portion d'extrémité 39 de la lumière latérale 33 est élargie pour permettre le passage des têtes d'extrémité 38 et 138 pour le montage. Les têtes d'extrémité 38 et 138 constituent l'organe de manoeuvre permettant à l'utilisateur de déplacer la butée mobile 31 entre la position de blocage et la position de déblocage.

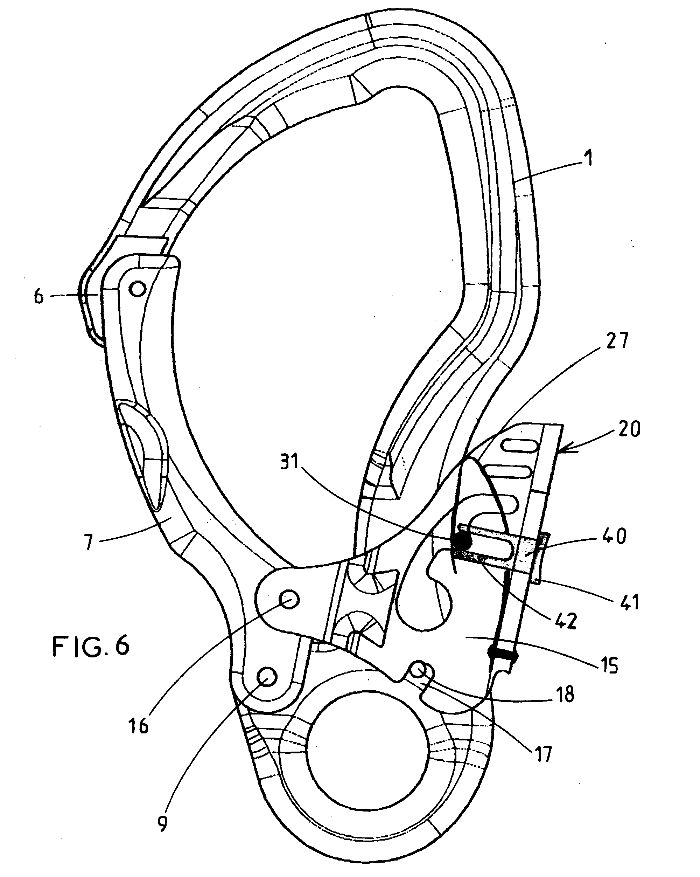

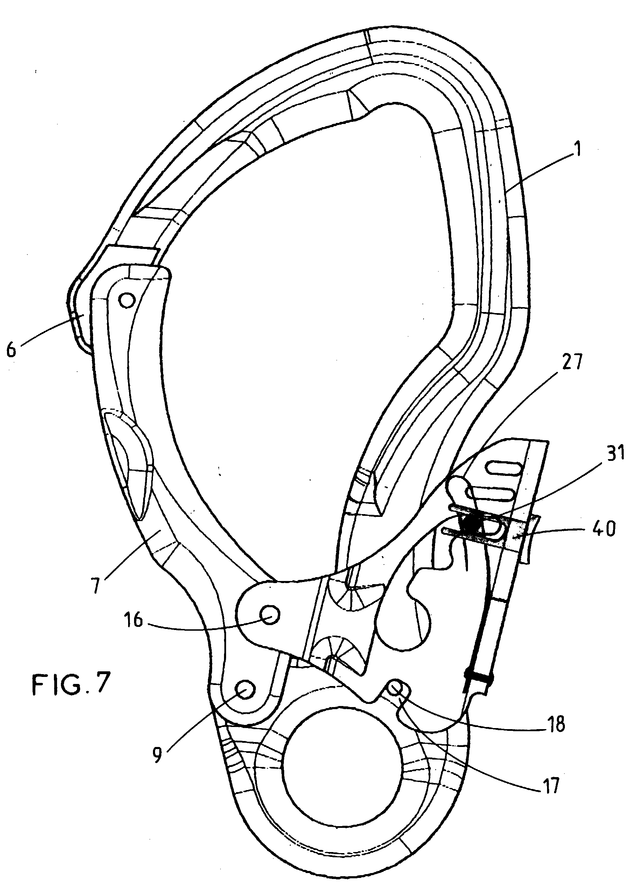

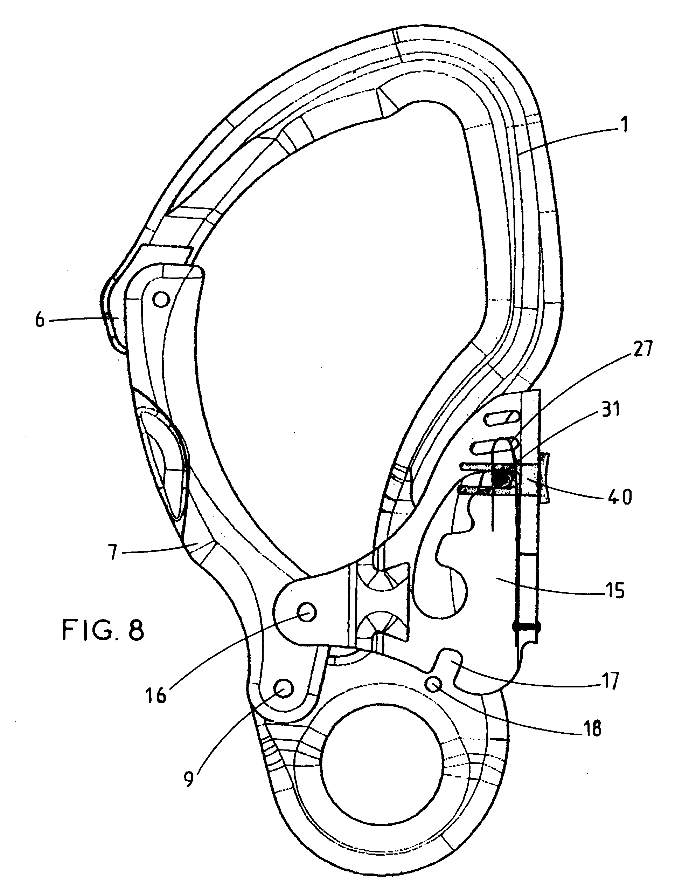

Dans le mode de réalisation illustré sur les figures 6 à 9, le déplacement de la butée mobile 31 entre la position de blocage illustrée sur la figure 6 et la position de déblocage illustrée sur les figures 7 à 9 est assuré par un coulisseau 40, comportant une tête 41 dépassant à l'extérieur de la paroi d'appui 20 du levier de verrouillage 15, et comportant une fourche 42 engagée de part et d'autre de l'axe antéropostérieur formant la butée mobile 31. Le coulisseau 40 coulisse longitudinalement dans une lumière longitudinale ménagée dans la paroi d'appui 20 du levier de verrouillage 15, entre la position de blocage illustrée sur la figure 6 et la position de déblocage illustrée sur les figures 7 à 9.

Pour le reste, le mousqueton des figures 6 à 9 comprend les mêmes éléments que celui des figures 1 à 5, et le fonctionnement est identique comme illustré sur les figures.

Selon un autre mode de réalisation, l'axe de levier 16 est disposé dans la portion de corps 1 opposée au doigt pivotant 7. Le levier de verrouillage 15 comprend alors une partie engageante coopérant avec une zone d'appui correspondante du doigt pivotant 7 en position de verrouillage pour s'opposer au pivotement d'ouverture du doigt pivotant 7, la partie engageante échappant à la zone d'appui du doigt pivotant 7 en position déverrouillée du levier de verrouillage 15 pour autoriser le pivotement d'ouverture du doigt pivotant 7. Ce mode de réalisation correspond à une structure de levier de verrouillage 15 telle que décrite dans le document FR 2 439 330 A, auquel on pourra se référer.

La forme particulière du corps 1 de mousqueton, comprenant un évidement externe 115 dans la portion de corps opposée au doigt pivotant 7, associée au fait que le levier de verrouillage 15 comprend une branche longitudinale de manoeuvre 26 qui reste engagée dans l'évidement externe 115 du corps 1, constitue une combinaison avantageuse susceptible d'être utilisée indépendamment de la présence ou de l'absence d'un moyen de blocage du levier de verrouillage 15, et quelle que soit la position choisie de l'axe de levier 16 sur le doigt pivotant 7 ou sur la portion opposée du corps 1.

La présente invention n'est pas limitée aux modes de réalisation qui ont été explicitement décrits, mais elle en inclut les diverses variantes et généralisations contenues dans le domaine des revendications ci-après.

## Revendications

1. Mousqueton à verrouillage automatique, comprenant un corps (1) de mousqueton ayant une ouverture (4) fermée par un doigt pivotant (7) articulé à sa première extrémité (8) selon un axe de rotation transversal (9), avec un levier de verrouillage (15) transversal monté de façon à pouvoir pivoter autour d'un axe de levier (16) entre une position de verrouillage vers laquelle il est rappelé par des moyens élastiques (27) et dans laquelle il est engagé entre le doigt pivotant (7) et une portion opposée du corps (1) pour interdire la rotation du doigt pivotant (7), et une position déverrouillée dans laquelle il libère le doigt pivotant (7) pour sa rotation d'ouverture, avec un moyen de blocage (31) pour bloquer sélectivement la rotation du levier de verrouillage (15) à l'écart de la position de verrouillage et interdire le déverrouillage, caractérisé en ce que :
- le moyen de blocage est une butée mobile (31), montée sur le levier de verrouillage (15), et déplaçable sur des guides (32) entre une position de blocage dans laquelle elle vient en appui contre une portion du corps (1) pour s'opposer au pivotement du levier de verrouillage (15), et une position de déblocage dans laquelle elle reste à l'écart de la portion du corps (1) pour autoriser le pivotement de déverrouillage du levier de verrouillage (15).

2. Mousqueton selon la revendication 1, caractérisé en ce que les guides (32) comportent une première encoche peu profonde (34) dans laquelle est engagée la butée mobile (31) en position de blocage, et une encoche plus profonde (35) dans laquelle peut s'engager la butée mobile (31) en position débloquée, les encoches (34, 35) se développant selon une direction généralement radiale à l'écart du corps (1).

3. Mousqueton selon la revendication 2, caractérisé en ce que la butée mobile (31) est sollicitée par un ressort (27) qui la repousse à l'écart du corps (1) soit dans le fond de la première encoche (34) soit vers le fond de la seconde encoche (35).

4. Mousqueton selon la revendication 3, caractérisé en ce que le même ressort (27) rappelle le levier de verrouillage (15) vers sa position de verrouillage et repousse la butée mobile (31) à l'écart du corps (1).

5. Mousqueton selon l'une quelconque des revendications 1 à 4, caractérisé en ce que :
- le levier de verrouillage (15) comprend deux branches parallèles (21, 22) reliées par une paroi d'appui (20),
- les guides (32) sont constitués par deux lumières latérales (33, 133) prévues chacune dans une branche parallèle (21, 22) respective,
- la butée mobile (31) est un axe antéropostérieur, monté à coulissement dans les lumières latérales (33, 133).

6. Mousqueton selon la revendication 5, caractérisé en ce que la butée mobile (31) comprend deux têtes d'extrémité (38, 138) constituant un organe de manoeuvre permettant à l'utilisateur de déplacer la butée mobile (31) entre la position de blocage et la position de déblocage.

7. Mousqueton selon la revendication 5, caractérisé en ce qu'il comprend un coulisseau (40), comportant une tête (41) dépassant à l'extérieur de la paroi d'appui (20) du levier de verrouillage (15), comportant une fourche (42) engagée de part et d'autre de l'axe antéropostérieur formant la butée mobile (31), et coulissant longitudinalement dans une lumière longitudinale prévue dans la paroi d'appui (20) du levier de verrouillage (15) entre la position de blocage et la position de déblocage.

8. Mousqueton selon l'une quelconque des revendications 5 à 7, caractérisé en ce que le ressort (27) est une lame flexible recourbée selon deux branches généralement parallèles, avec une première branche (28) engagée fonctionnellement entre le corps (1) et le levier de verrouillage (15) pour repousser le levier de verrouillage (15) vers sa position verrouillée, et avec sa seconde branche (30) engagée fonctionnellement entre le corps (1) et la butée mobile (31) pour repousser la butée mobile (31) à l'écart du corps (1).

9. Mousqueton selon l'une quelconque des revendications 1 à 8, caractérisé en ce que :
- l'axe de levier (16) est disposé en position intermédiaire sur le doigt pivotant (7),
- le levier de verrouillage (15) comprend une partie engageante (17) coopérant avec une zone d'appui (18) correspondante du corps (1) en position de verrouillage pour s'opposer au déplacement transversal du levier de verrouillage (15) et du doigt pivotant (7), la partie engageante (17) échappant à la zone d'appui (18) du corps (1) en position déverrouillée du levier de verrouillage (15) pour autoriser le pivotement d'ouverture du doigt pivotant (7).

10. Mousqueton selon l'une quelconque des revendications 1 à 8, caractérisé en ce que :
- l'axe de levier est disposé dans ladite portion opposée du corps (1),
- le levier de verrouillage (15) comprend une partie engageante coopérant avec une zone d'appui correspondante du doigt pivotant (7) en position de verrouillage pour s'opposer au pivotement d'ouverture du doigt pivotant (7), la partie engageante échappant à la zone d'appui du doigt pivotant (7) en position déverrouillée du levier de verrouillage (15) pour autoriser le pivotement d'ouverture du doigt pivotant (7).
